# EUROPÄISCHE PATENTSCHRIFT

(11) **EP 2 452 092 B1**
(45) Veröffentlichungstag und Bekanntmachung des Hinweises auf die Patenterteilung: **08.05.2013**
(21) Anmeldenummer: 10729698.0
(22) Anmeldetag: 23.06.2010
(51) Int. Cl.: F16D 3/68

(54) **ELASTISCHE KUPPLUNG**
ELASTIC COUPLING
ACCOUPLEMENT ÉLASTIQUE

(30) Priorität: 09.07.2009 DE 102009032690
(43) Veröffentlichungstag der Anmeldung: 16.05.2012
(73) Patentinhaber: Voith Patent GmbH, 89522 Heidenheim (DE)
(72) Erfinder: BECKER, Markus, K., 44388 Dortmund (DE); MARCINKOWSKI, Maik, 44894 Bochum (DE)
(74) Vertreter: Dr. Weitzel & Partner
(86) Internationale Anmeldenummer: PCT/EP2010/003832
(87) Internationale Veröffentlichungsnummer: WO 2011/003515

(56) Entgegenhaltungen:
- EP-A2- 0 218 377
- EP-A2- 0 218 378
- EP-A2- 0 493 163
- CH-A5- 645 959
- DE-U1- 8 815 979
- GB-A- 953 821

## Beschreibung

Die Erfindung betrifft eine elastische Kupplung mit den Merkmalen im Oberbegriff des Anspruchs 1 und des Anspruchs 2.

Eine gattungsgemäße Kupplung ist beispielsweise in der deutschen Patentschrift DE 39 06 201 C2 beschrieben. Die dort beschriebene drehelastische Kupplung weist einen Primärteil und einen Sekundärteil auf, welche hier im Wesentlichen sternförmig ausgebildet sind. Zwischen dem Primärteil und dem Sekundärteil sind dabei gleichmäßig über den Umfang verteilt Federelemente angeordnet. Die einzelnen Federelemente bestehen aus elastischen Körpern, beispielsweise aus Gummi, und dazwischen angeordneten Stützplatten. Die elastischen Körper aus Gummi können an den Stützplatten anvulkanisiert sein.

Kommt es nun zu einer Belastung der elastischen Kupplung mit einem Drehmoment, so werden die Federelemente im Bereich der elastischen Kupplung typischerweise gestaucht. Häufig werden die Federelemente zudem mit einer Vorspannung zwischen die Kupplungsteile eingebaut, sodass auch bereits im unbelasteten Zustand der Kupplung eine Stauchung auftritt. Die um die Stirnseite der elastischen Federkörper verlaufende nutartige Kontur, welche den elastischen Federkörper im unverspannten Zustand in der Art eines Kreisausschnitts beziehungsweise U's einwölbt, wird dabei entsprechend verspannt. In der Praxis hat sich nun gezeigt, dass die Kontur dieser Nut im verspannten Zustand eine wellenartige Form annimmt, welche im Wesentlichen in der Art eines gerundeten W ausgebildet ist. Diese Kontur mit drei Wendepunkten hat dabei den entscheidenden Nachteil, dass damit eine vergleichsweise hohe mechanische Belastung des elastischen Federkörpers einhergeht.

So hat sich in der Praxis gezeigt, dass derartige elastische Kupplungen beziehungsweise deren Federelemente sehr häufig durch ein Einreißen der elastischen Federkörper, insbesondere im Bereich der am weitesten in Richtung des Mittelpunkts des elastischen Federkörpers liegenden Tiefpunkte der im verspannten Zustand W-förmigen Kontur, geschädigt werden. Um einer solchen Schädigung vorzubeugen beziehungsweise diese im Hinblick auf die Lebensdauer des Federelements möglichst lange hinauszuzögern, werden die Federelemente mit einem vergleichsweise großen Querschnitt realisiert. Dies hat jedoch den Nachteil, dass die elastische Kupplung, insbesondere in axialer Richtung im Bereich der Federelemente, entsprechend dick wird und damit viel Bauraum benötigt. Bei den mittlerweile üblichen sehr kompakten Antriebssträngen, wie sie beispielsweise in Personenkraftwagen, aber zunehmend auch in Nutzfahrzeugen eingesetzt werden, ist dies ein entscheidender Nachteil.

Zum weiteren Stand der Technik wird auf die CH 645 959 A5, die EP 0 218 377 A2, die EP 0 493 163 A2, die GB 953 821 A, die EP 0 218 378 A2 und die DE 88 15 979 U1 verwiesen.

Ausgehend von dieser Problematik ist es nun die Aufgabe der hier vorliegenden Erfindung, einen Aufbau für eine elastische Kupplung anzugeben, welcher diese Nachteile vermeidet und mit einem kleinen Querschnitt der Federelemente eine dauerhaft zuverlässig arbeitende elastische Kupplung darzustellen vermag.

Erfindungsgemäß wird diese Aufgabe durch die Merkmale im kennzeichnenden Teil des Anspruchs 1 gelöst. Vorteilhafte Ausgestaltungen und Weiterbildungen des erfindungsgemäßen Aufbaus sind in den abhängigen Ansprüchen angegeben.

Dadurch, dass der Verlauf der Kontur so ausgebildet wird, dass er in verspanntem Zustand des elastischen Federkörpers frei von einem Wendepunkt ist, ergibt sich eine sehr viel geringere Belastung des Materials des elastischen Federkörpers. Versuche haben gezeigt, dass bei vergleichbaren übertragenen Drehmomenten und ähnlichen Lebensdauern, wie sie mit herkömmlichen elastischen Federkörpern gemäß dem Stand der Technik erzielt werden, ein Drittel des Bauraums der Federelemente eingespart werden kann. Insbesondere kann diese Bauraumersparnis in axialer Baurichtung der elastischen Kupplung realisiert werden, sodass eine sehr schmale elastische Kupplung entsteht, welche in einem Antriebsstrang sehr viel einfacher in bestehende Räume integriert werden kann, als eine herkömmliche Kupplung. Dieser Aufbau hat also entscheidende Vorteile hinsichtlich eines bei vergleichbarer Lebensdauer sehr viel geringeren

Bauvolumens oder, bei vergleichbarem Bauvolumen, einer sehr stark erhöhten Lebensdauer der Federkörper in der elastischen Kupplung.

Dieser im verspannten Zustand erzielte Verlauf der Kontur frei von einem Wendepunkt kann in besonders bevorzugter Art dadurch erzielt werden, dass die Kontur im nicht verspannten Zustand spiegelsymmetrisch zu einer Mittellinie in einer Ebene, in welcher die Mittelachse des elastischen Federkörpers ausgebildet ist, wobei jede der Hälften der Kontur, ausgehend von keiner Steigung im Bereich der Mittellinie mit ansteigender Steigung verläuft. Dieser Verlauf ausgehend von einer Steigung von Null, also einer parallel zur Mittelachse des elastischen Federkörpers verlaufenden Tangente an der Kontur in ihrem am weitesten der Mittelachse zugewandten Punkt und ausgehend hiervon eine ansteigende Steigung bis zum Ende der jeweiligen Kontur, macht es möglich, dass im verspannten Zustand eines derartigen elastischen Federelements dann eine Kontur ohne Wendepunkt erzielt wird, welche eine sehr viel höhere Festigkeit und/oder Lebensdauer ermöglicht.

Dabei ist die Kontur im nicht verspannten Zustand spiegelsymmetrisch zu einer Mittellinie in einer Ebene, in welcher die Mittelachse des elastischen Festkörpers ausgebildet ist, wobei die Kontur durch einen Zug aus mehreren Geraden in Richtung der Mittelachse begrenzt ist, wobei eine erste Gerade ausgehend von der Mittellinie in einem ersten Winkel von 40 - 50 Grad, insbesondere 45 Grad, zu einer senkrecht zur Mittellinie angeordneten Hilfsgeraden verläuft; und jede weitere Gerade auf der vorhergehenden Geraden in einem Punkt ansetzt, in dem die Projektion der vorhergehenden Geraden senkrecht zur Mittellinie 40 - 60 %, insbesondere 50 %, der verbleibenden Restbreite der Hälfte der Kontur erreicht, wobei der Winkel zwischen der Geraden und der vorherigen Geraden 40 - 60 %, insbesondere 50 % des Winkels zwischen den vorhergegangenen (Hilfs-Geraden beträgt.

Dieser Aufbau, bei dem sich die stetig verlaufende Kurve der Kontur an einen Zug aus Geraden anschmiegt, welche jeweils in der Hälfte der verbleibenden Restbreite mit einer weiteren Geraden fortgesetzt wird, welche in etwa im Bereich der Winkelhalbierenden verläuft, ergibt eine Kontur, welche so aus dem Bereich der Bionik bekannt ist. Eine solche Kontur gilt dabei als sehr günstig hinsichtlich einer eventuell auftretenden Kerbwirkung. Den Erfindern hat sich nun in überraschender Weise gezeigt, dass eine Ausgestaltung der Nut in dem elastischen Federkörper in unverspanntem Zustand gemäß einer derartigen Gesetzmäßigkeit auchim verspannten Zustand zu einer Kontur führt, welche frei von einem Wendepunkt ist und hinsichtlich der auftretenden Kerbwirkungen eine ideale Ausgestaltung darstellt. Die so in unverspanntem Zustand modellierte Kontur kann auch im verspannten Zustand die optimale Festigkeit des elastischen Federkörpers bei der erforderlichen beziehungsweise vorgegebenen Elastizität ermöglichen. Dieser Aufbau kann damit die gewünschten mechanischen Eigenschaften bei deutlich geringeren Abmessungen erzielen, als dies bei Aufbauten gemäß dem Stand der Technik der Fall ist.

In einer alternativen erfindungsgemäßen Lösung ist die Kontur im verspannten Zustand spiegelsymmetrisch zu einer Mittellinie in einer Ebene, in welcher die Mittelachse des elastischen Federkörpers verläuft, ausgebildet. Jede der Hälfte der Konturen ist so ausgebildet, dass die Kontur der Nut durch einen Kreisabschnitt und den Teil einer Tangensfunktion gebildet ist, wobei der Teil des Kreisabschnitts ausgehend von der Mittellinie bis zu einem Punkt läuft, in dem er stetig in die Tangensfunktion übergeht. Dieser Aufbau weist ebenfalls eine geringe Kerbwirkung auf, da er sich an den oben beschriebenen vergleichsweise komplex zu konstruierenden Aufbau anlehnt.

In einer weiteren sehr günstigen und vorteilhaften Weiterbildung der Erfindung ist es ferner vorgesehen, dass die Kontur im verspannten Zustand des elastischen Federkörpers in jeder der Ebenen, in welcher die Mittelachse des elastischen Federkörpers verläuft, im Wesentlichen identisch ist.

Dies bedeutet, dass die Kontur nicht nur in bestimmten Bereichen des elastischen Federkörpers, beispielsweise entlang seiner axialen Stirnseiten bei einem rechteckigen Federkörper, die entsprechende Kontur aufweist, sondern umlaufend um den gesamten elastischen Federkörper. Damit lässt sich eine besonders gute und gleichmäßige Elastizität bei bester mechanischer Widerstandsfähigkeit des elastischen Federkörpers erzielen.

In einer vorteilhaften Ausgestaltung der elastischen Kupplung ist es außerdem vorgesehen, dass die Breite der Kontur 85 % - 95 %, bevorzugt 93,5 %, der Dicke des elastischen Federkörpers einnimmt, wobei auf beiden Seiten der Kontur Teile

des elastischen Federkörpers zwischen der Kontur und den Stützplatten verbleibt, deren Außenkontur im Wesentlichen senkrecht zur Mittellinie verläuft.

In dem im Stand der Technik üblichen Aufbau, ist der elastische Federkörper an die Stützplatten anvulkanisiert und weist im Bereich der Stützplatte beziehungsweise im Bereich der an der Stützplatte anliegenden Kante eine Dicke auf, welche dieses Vulkanisieren ermöglicht. Der erfindungsgemäße Aufbau sieht dagegen vor, dass hier eine entsprechende Materialdicke mit 1 - (85 % bis 95 %), bevorzugt 1 - 93,5 % der Dicke des elastischen Federkörpers im Bereich der Stützplatte anliegt. Diese Materialdicke verläuft dabei im Wesentlichen so, dass die Kontur der Stützplatte durch die Materialdicke fortgesetzt wird, ehe die Nut mit ihrer Kontur anfängt. Dieser im Bereich von 1 - 93,5 % der Gesamtdicke des elastischen Federkörpers liegende Randbereich, welcher sich auf die beiden dem elastischen Federkörper benachbarten Stützplatten aufteilt, steigert ebenfalls die mechanische Festigkeit des elastischen Federkörpers, da der Start der Kontur nicht direkt oder fast neben den Stützplatten beginnt, sondern an einer definierten Stelle innerhalb des elastischen Federkörpers selbst. Dies ermöglicht es, dass in dem Bereich, in dem die Nut ausläuft, nur das Material des elastischen Federkörpers beteiligt ist und bei eventuell in radialer Richtung auftretenden Kräften die Verbindung zwischen dem elastischen Federkörper und der Stützplatte durch derartige Kräfte nicht auf Scherung beansprucht wird.

In einer weiteren sehr vorteilhaften Ausgestaltung der elastischen Kupplung gemäß der Erfindung ist es außerdem vorgesehen, dass die senkrecht zur Mittelachse ausgebildeten Oberflächen der elastischen Federkörper und der Stützplatten in jedem der elastischen Federkörper und in jeder der Stützplatten im Wesentlichen parallel zueinander ausgebildet sind.

Entgegen dem bei derartigen elastischen Kupplungen auch üblichen Aufbau, bei dem Stützplatten und/oder elastische Federkörpern keilförmig ausgebildet sind, um so ein Federelement zu realisieren, welches keine gerade Mittelachse aufweist, sondern eine Mittelachse, welche dem Umfang der elastischen Kupplung folgt, weist der parallele Aufbau bei der erfindungsgemäßen elastischen Kupplung entsprechende Vorteile auf. Bei einem keilförmigen Aufbau entweder der Stützplatten und/oder der elastischen Federkörper kann es sehr leicht zu einem Herausquetschen der Federkörper und/oder der Stützplatten in axialer Richtung nach außen kommen. Bei einem Aufbau des Federelements, welches eine gerade Mittelachse aufweist und im Wesentlichen von parallelen Randflächen der einzelnen elastischen Federkörper und Stützplatten bestimmt ist, verteilt sich eine auftretende Druckkraft, wie sie bei der Übertragung eines Drehmoments auf das Federelement wirkt, gleichmäßig über die gesamte Fläche der einzelnen elastischen Stützkörper und es treten keine oder keine wesentlichen Kraftkomponenten in radialer Richtung der elastischen Kupplung auf. Auch dies unterstützt eine bessere Stabilität der Federelemente und ermöglicht somit eine kleiner bauende elastische Kupplung mit einer entsprechend langen Lebensdauer.

Weitere vorteilhafte Ausgestaltungen der erfindungsgemäßen elastischen Kupplung ergeben sich außerdem aus den restlichen abhängigen Ansprüchen und werden anhand des Ausführungsbeispiels deutlich, welches nachfolgend unter Bezugnahme auf die Figuren näher erläutert wird.

Dabei zeigen:
- Figur 1: einen Ausschnitt aus einer elastischen Kupplung gemäß der Erfindung;
- Figur 2: eine Seitenansicht und eine Draufsicht auf einen Teil eines Federelements gemäß Figur 1;
- Figur 3: einen Ausschnitt aus einem elastischen Federkörper mit Stützplatten gemäß dem Stand der Technik im unverspannten und verspannten Zustand;
- Figur 4: einen Ausschnitt aus einem elastischen Federkörper mit Stützplatten gemäß der Erfindung im unverspannten und verspannten Zustand; und
- Figur 5: eine schematische Darstellung zur Konstruktion zweier beispielhafter Konturen des elastischen Federkörpers gemäß der Erfindung.

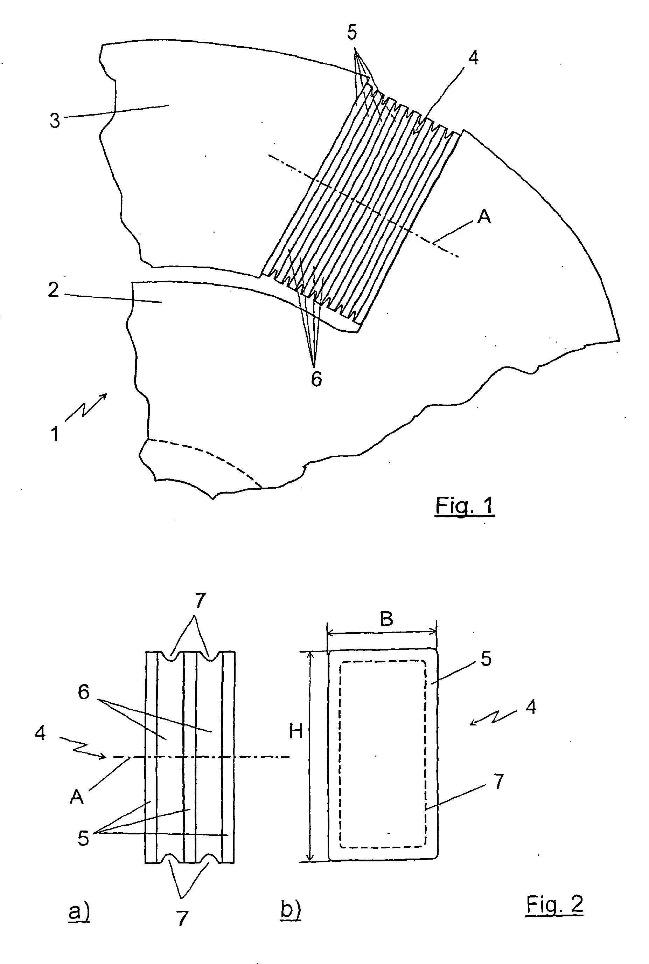

In der Darstellung der Figur 1 ist ein Ausschnitt aus einer elastischen Kupplung 1 zu erkennen, welche als elastische oder hochelastische Kupplung ausgebildet ist und beispielweise in Antriebssträngen eingesetzt werden kann. Solche Antriebsstränge können insbesondere in Fahrzeugen, jedoch auch in industriellen Anwendungen angeordnet sein. Die elastische Kupplung 1 besteht im Wesentlichen aus einem Primärteil 2 und einem Sekundärteil 3. In an sich bekannter Art und Weise ist das Primärteil 2 der elastischen Kupplung 1 dabei mit einem Antriebsstrang eingangsseitig verbunden. Das Sekundärteil 3 ist ausgangsseitig mit dem Antriebsstrang verbunden. Die elastische Kupplung 1 kann beispielsweise zwischen dem Motor und einem Getriebe des Antriebsstranges angeordnet sein. Das Primärteil 2 wäre dann mit der Kurbelwelle, das Sekundärteil 3 mit dem Getriebeeingang verbunden.

Das Primärteil 2 und das Sekundärteil 3 sind gegeneinander verdrehbar und weisen beispielsweise eine sternförmige Kontur auf. Zwischen den radial nach außen ragenden Elementen dieser sternförmigen Kontur des Primärteils 2 und des Sekundärteils 3 sind Federelemente 4 angeordnet. Eine elastische Kupplung 1 weist dabei typischerweise mehrere derartige Federelemente 4 auf, welche zwischen dem Primärteil 2 und dem Sekundärteil 3 über den Umfang verteilt in der elastischen Kupplung 1 angeordnet sind.

Die elastische Kupplung 1 funktioniert nun in an sich bekannter Art und Weise so, dass ein Drehmoment über eine mit dem Primärteil 2 verbundene Welle in den Bereich der elastischen Kupplung 1 eingeleitet wird. Dadurch wird das Primärteil 2 entsprechend verdreht. Über die Federelemente 4 wird dieses Drehmoment dann auf das Sekundärteil 3 übertragen. Aufgrund der Elastizität der Federelemente 4 kommt es dabei in an sich bekannter Art und Weise beispielsweise zu einer Dämpfung von Spitzen in dem übertragenen Drehmoment, sodass im Bereich des Sekundärteils 3 ein sehr gleichmäßiges Drehmoment ansteht.

Das Federelement 4 in der Darstellung der Figur 1 ist aus mehreren Stützplatten 5, von denen lediglich einige mit einem Bezugszeichen versehen sind, und dazwischen angeordneten elastischen Federkörpern 6, beispielsweise aus Gummi oder einem geeigneten elastischen Polymer oder dergleichen, aufgebaut. Dieser Aufbau ist in der Darstellung der Figur 2 nochmals deutlicher zu erkennen. In Figur 2 sind dabei lediglich zwei der elastischen Federkörper 6 dargestellt, welche abwechselnd mit Stützplatten 5 zu dem Federelement 4 beziehungsweise dem hier dargestellten Teil des Federelements 4 gestapelt sind. In der Seitenansicht in Figur 2a) ist außerdem eine Mittelachse A des Federelements 4 und damit letztlich auch der Stützplatten 5 und der elastischen Federkörper 6 zu erkennen. In Figur 2b) ist nun eine Draufsicht auf diesen Aufbau dargestellt. Dabei ist zu erkennen, dass das Federelement 4 im hier dargestellten Ausführungsbeispiel eine rechteckige Form mit der Höhe H und der Breite B aufweist. In den Figuren 1 und 2 ist zu erkennen, dass die Mittelachse A als gerade Achse realisiert ist. Der Aufbau des Federelements 4 ist also so gestaltet, dass die elastischen Federkörper 6 und die Stützplatten 5 jeweils parallele Oberflächen aufweisen, weiche alle im Wesentlichen senkrecht zur Mittelachse A ausgebildet sind. Dieser Aufbau erfordert dann eine entsprechende Anpassung der Anlageflächen des elastischen Federkörpers 4 an dem Primärteil 2 und dem Sekundärteil 3. Die Anlageflächen dort verlaufen nicht radial aus Sicht der elastischen Kupplung 1, sondern parallel zueinander, sodass das im Wesentlichen quaderförmige Federelement 4 aufgenommen werden kann. Eine aus dem Stand der Technik ebenfalls bekannte Alternative sieht es dagegen vor, dass die elastischen Federkörper 6 und/oder die Stützplatten 5 keilförmig ausgebildet sind, sodass radial verlaufende Anlageflächen realisiert werden können. Dies hat jedoch den Nachteil, dass es im Bereich des Federelements 4 zu Kraftkomponenten in radialer Richtung nach außen kommt, welche zu einer zusätzlichen Belastung des Federelements 4 führen. Bei dem hier dargestellten Aufbau mit parallelen, im Wesentlichen quaderförmig ausgebildeten Federelementen 4 kann dieser Nachteil vermieden werden. Dies gilt dabei nicht nur für die in den Figuren 1 und 2 dargestellten quaderförmigen Federelemente 4, sondern selbstverständlich auch für entsprechende Federelemente mit einer beispielsweise ovalen oder runden Außenkontur senkrecht zur Mittelachse A.

Wie in der Darstellung der Figur 1 und 2 zu erkennen ist, sind die Federelemente 4 nach außen jeweils durch abschließende Stützplatten 5 begrenzt. Diese Stützplatten 5 bestehen typischerweise aus einem metallischen Material. Das Federelement 4 selbst kann dann als eine einzige Einheit ausgebildet sein, bei der Stützplatten 5 und elastische Federkörper 6 durch geeignete Verfahren fest miteinander verbunden sind. Neben diversen Klebeverfahren kann dies beim Einsatz von elastischen Federkörpern 6 aus Gummi insbesondere ein Verbinden der Stützplatten 5 mit den elastischen Federkörpern 6 durch Vulkanisieren sein.

Insbesondere in der vergrößerten Darstellung der Figur 2 ist zu erkennen, dass die elastischen Federkörper 6 eine Nut 7 aufweisen, welche an ihrer Stirnseite umlaufend um den elastischen Federkörper 6 ausgebildet ist. Für die weitere Erläuterung der hier dargestellten Erfindung ist dabei der Verlauf einer Kontur dieser Nut 7 von entscheidender Bedeutung. Der Verlauf der Kontur dieser Nut 7 ist nachfolgend jeweils in einer Ebene, in welcher die Mittelachse A des elastischen Federkörpers 6 und damit des Federelements 4 verläuft, entsprechend beschrieben. Da die Nut 7 bevorzugt um den elastischen Federkörper 6 umlaufend mit identischer Kontur ausgebildet ist, gilt das Nachfolgende dann für jede beliebige Ebene mit der Mittelachse A.

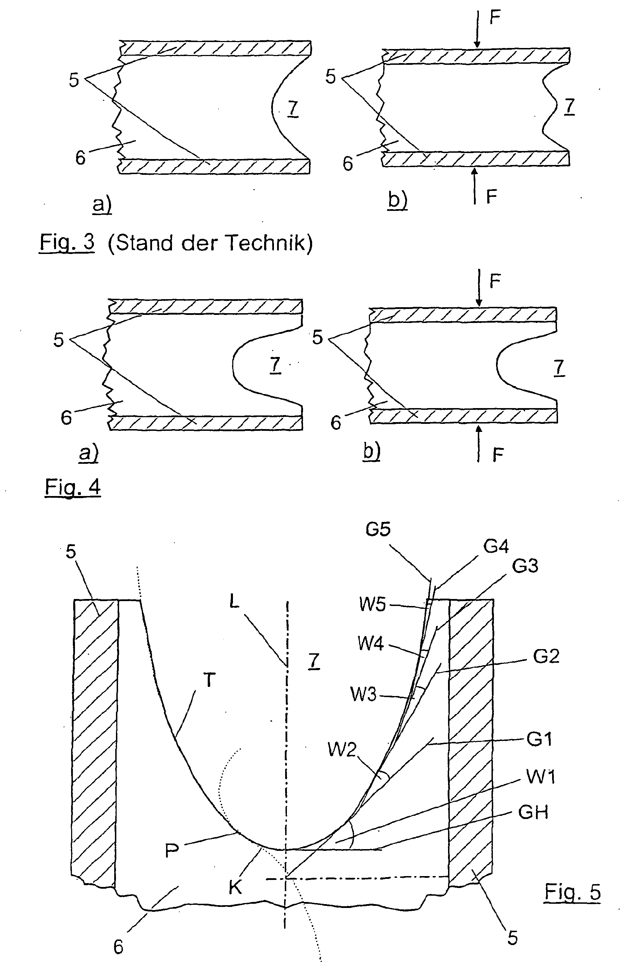

Die Darstellungen der Figuren 3 und 4 zeigen entsprechende Ausschnitte aus einem der elastischen Federkörper 6 mit zwei benachbart hierzu angeordneten Stützplatten 5, bei dem die Kontur der Nut 7 nochmals im Detail zu erkennen ist.

Der in Figur 3 dargestellte Aufbau ist dabei der bisher gemäß dem Stand der Technik übliche Aufbau. Der elastische Federkörper 6, welcher beispielsweise aus Gummi ausgebildet ist, ist an die Stützplatten 5 anvulkanisiert und weist die Nut 7 auf. Der Übergang von der Stützplatte 5 zum elastischen Federkörper 6 ist dabei lediglich so dick, wie es für das Anvulkanisieren notwendig ist. Die Nut 7 weist eine Kontur auf, welche als einfacher Bogen ausgeführt ist. In der Darstellung der Figur 3b) ist dieser Aufbau gemäß dem Stand der Technik nun im verspannten Zustand, wie es durch die Pfeile F angedeutet ist, zu erkennen. Außerdem ist in der Darstellung der Figur 3b) bei dem elastischen Federkörper 6 gemäß dem Stand der Technik zu erkennen, dass die Kontur der Nut 7 im verspannten Zustand im Wesentlichen in der Art eines gerundeten W ausgebildet ist. Die Kontur weist also zwei Wendepunkte auf, wenn man diese als Kurve betrachtet. Damit kommt es zu einer sehr starken Kerbwirkung auf die Stirnseite des elastischen Federkörpers 6 gemäß dem Stand der Technik. Um dieser entgegenzuwirken, muss der elastische Federkörper 6 entsprechend groß und voluminös ausgebildet werden, was jedoch die Baugröße der elastischen Kupplung 1 negativ beeinflusst.

In der Darstellung der Figur 4 ist nun der erfindungsgemäße Aufbau der Kontur der Nut 7 zu erkennen. Auch hier zeigt die Figur 4a) einen Aufbau im unverspannten Zustand, während in Figur 4b) der wiederum durch die Pfeile F angedeutete verspannte Zustand dargestellt ist. Die Kontur der Nut 7 in der Darstellung der Figur 4 ist nun so ausgebildet, dass diese auch im verspannten Zustand frei von einem Wendepunkt ist. Außerdem ist in der Darstellung der Figur 4 zu erkennen, dass die Kontur der Nut 7 nicht unmittelbar im Bereich der Verbindung zwischen dem elastischen Federkörper 6 und den Stützplatten 5 ansetzt, sondern dass die Kontur selbst lediglich eine Breite von 85 % - 95 %, bevorzugt 93,5 % des gesamten elastischen Federkörpers 6 ausmacht. Dieser Aufbau mit entsprechenden Randstärken, welche im Wesentlichen parallel zur Mittelachse A des elastischen Federkörpers 6 verlaufen, ermöglicht es, die Kontur der Nut 7 definiert im Bereich des elastischen Federkörpers 6 selbst beginnen zu lassen, sodass in dem Bereich, in dem die Nut ausläuft, nur das Material des elastischen Federkörpers 6 beteiligt ist und bei eventuell in radialer Richtung auftretenden Kräften die Verbindung zwischen dem elastischen Federkörper 6 und der Stützplatte 5 durch derartige Kräfte nicht auf Scherung beansprucht wird.

Um eine solche Kontur der Nut 7 zu erreichen, welche im verspannten Zustand, wie er beispielsweise in Figur 4b) angedeutet ist, frei von einem Wendepunkt ist, muss die Kontur im unverspannten Zustand im Wesentlichen so ausgebildet sein, dass diese spiegelsymmetrisch zu einer Mittellinie L ist, welche in einer Ebene senkrecht zur Mittelachse A des elastischen Federkörpers 6 ausgebildet ist. Diese Mittellinie L ist in Figur 5 entsprechend angedeutet. Die Kontur der Nut 7 muss dabei in jeder Hälfte ausgehend von einer Steigung von Null in Richtung der Stützplatte 5 mit ansteigender Steigung, insbesondere einer stetig ansteigenden Steigung, ausgebildet sein. Prinzipiell könnte eine solche Form also beispielsweise durch eine Parabel erzielt werden.

Den Erfindern hat sich nun gezeigt, dass ein besonders günstiger und vorteilhafter Aufbau des Verlaufs der Kontur der Nut 7 erzielt werden kann, wenn im unverspannten Zustand des elastischen Federkörpers 6 eine Kontur gewählt wird, welche eine sehr geringe Anfälligkeit gegen Kerbwirkung zeigt. Eine solche Kontur ist beispielhaft in der rechten Hälfte der Figur 5 beschrieben. Die Kontur ist dabei durch einen Zug aus mehreren Geraden GH, G1, ...Gn in Richtung der Mittelachse A des elastischen Federkörpers 6 begrenzt. Die Kontur selbst folgt dann in etwa diesem Geradenzug mit einer stetigen Kurve. In der Darstellung der Figur 5 ist in der rechten Hälfte ein derartiger Aufbau zu erkennen und soll beispielhaft erläutert werden. Der Aufbau startet im Bereich der Mittellinie L mit einer Steigung der Kontur der Nut 7 von Null. Die Kurve schmiegt sich dann an eine erste Gerade G1 an, welche in einem ersten Winkel W1 verläuft. Dieser Winkel W1 entspricht dabei in idealer Weise der Winkelhalbierenden zwischen der Mittellinie L und einer entsprechend der Steigung im Berührungspunkt der Kontur mit der Mittellinie L angelegten Hilfsgeraden GH. Da die Steigung, wie bereits erwähnt, Null sein soll, ist die Hilfsgerade GH im rechten Winkel zur Mittellinie L angeordnet. Der Winkel W1 der Gerade G1 gegenüber dieser Hilfsgeraden GH wird also in etwa 45 Grad betragen. Dabei sind selbstverständlich Winkel im Bereich beispielsweise zwischen 40 und 50 Grad ebenfalls denkbar. Nachdem in etwa die halbe Breite oder eine Breite von ca. 40 - 60 % der Kontur (ohne die Randstärken) in der Projektion auf eine Senkrechte zur Mittellinie L erreicht wurde, setzt eine zweite Gerade G2 auf der ersten Geraden G1 an. Der Winkel W2 dieser neuen Geraden G2 gegenüber der ersten Geraden G1 beträgt nun 40 - 60 % des Winkels W1 zwischen der ersten Geraden G1 und der Hilfsgeraden GH. Wiederum nachdem die Hälfte der verbleibenden Restbreite der Kontur in der Projektion durchschritten ist, setzt an der Geraden G2 eine weitere Gerade G3 an. Der Winkel W3 zwischen der Geraden G2 und der Geraden G3 beträgt dabei wiederum 40 - 60 % des Winkels W2 zwischen den beiden vorhergehenden Geraden G1 und G2. In bevorzugter Manier ist auch hier wieder eine Winkelhalbierende anzusetzen, sodass der Winkel W3 insbesondere 50 % des Winkels W2 beträgt. Dieser Aufbau setzt sich entsprechend fort, wobei in der hier gewählten Darstellung noch die Geraden G4 und G5 dargestellt sind. Die Kontur der Nut 7 schmiegt sich dann an diesen Zug aus Geraden G1 bis G5 entsprechend an. Prinzipiell ist eine annähernd beliebige Anzahl von 1 bis n Geraden denkbar.

Dieser im unverspannten Zustand des elastischen Federkörpers 6 hinsichtlich der Kerbwirkung optimale Aufbau ermöglicht es dann, wie bereits mehrfach erwähnt, dass auch im verspannten Zustand des elastischen Federkörpers 6 eine sehr hohe Stabilität erzielt werden kann. Insbesondere führt dies dazu, dass der elastische Federkörper 6 so aufgebaut werden kann, dass seine in Figur 2 dargestellte Breite B gegenüber einem Aufbau gemäß dem Stand der Technik um einen Wert von bis zu einem Drittel reduziert werden kann, ohne die mechanischen Eigenschaften des mit derartigen elastischen Federkörpern 6 versehenen Federelements 4 nachteilig zu beeinflussen. Damit wird eine in axialer Richtung sehr viel schmalere Bauform der elastischen Kupplung 1 möglich.

In der linken Hälfte der Figur 5 ist nun ein alternativer Aufbau für eine Hälfte der Kontur der Nut 7 dargestellt. Ausgehend von einem Kreisbogen K geht die Kontur in einem Punkt P stetig in eine mit T bezeichnete Tangensfunktion über. Ein vergleichbarer Aufbau mit einer detaillierten Beschreibung der notwendigen mathematischen Funktionen ist aus der Anmeldung mit dem deutschen Aktenzeichen DE 10 2008 045 318.8 der Anmelderin bekannt. Dieser Aufbau lässt sich analog auf die hier beschriebene Kontur übertragen, sodass auf den Aufbau im weiteren Detail nicht eingegangen wird. Dieser Aufbau weist ebenfalls eine geringe Kerbwirkung auf, da er sich an den auf der rechten Seite beschriebenen vergleichsweise komplex zu konstruierenden Aufbau anlehnt. Der Aufbau auf der linken Hälfte der Figur 5 kann also als Alternative genutzt werden, wenn dieser fertigungstechnisch entsprechend einfacher realisiert werden kann, ohne nennenswerte Nachteile hinsichtlich der Funktionalität der elastischen Federkörper 6 zu verursachen.

Die Kontur der Nut 7 kann dabei prinzipiell nur in hochbelasteten Abschnitten des elastischen Federkörpers 6 in der hier dargestellten Art ausgebildet sein. Besonders bevorzugt ist jedoch ein Aufbau, bei dem die Kontur umlaufend um die gesamten Stirnflächen jedes der elastischen Federkörper 6 der Federelemente 4 in der dargestellten Art und Weise ausgebildet ist.

## Patentansprüche

1. Elastische Kupplung mit
1.1 einem Primärteil;
1.2 einem Sekundärteil;
1.3 mehreren über den Umfang verteilt zwischen Primärteil und Sekundärteil angeordneten Federelementen;
1.4 wenigstens einem elastischen Federkörper in jedem der Federelemente, welcher zwischen zwei Stützplatten angeordnet ist, wobei
1.5 der elastische Federkörper im Bereich seiner Stirnseiten eine umlaufende Nut aufweist,
**dadurch gekennzeichnet, dass**
1.6 der Verlauf einer Kontur der Nut (7) in einer Ebene, in welcher die Mittelachse (A) des elastischen Federkörpers (6) verläuft, im verspannten Zustand des elastischen Federkörpers (6) frei von einem Wendepunkt ist, wozu
1.7 die Kontur der Nut (7) im nicht verspannten Zustand spiegelsymmetrisch zu einer Mittellinie (L) in der Ebene, in welcher die Mittelachse (A) des elastischen Federkörpers (6) verläuft, ausgebildet ist, wobei jede der Hälften der Kontur so ausgebildet ist, dass
1.8 die Kontur der Nut (7) durch einen Zug aus mehreren Geraden (G1 ...Gn) in Richtung der Mittelachse (A) und der benachbarten Stützplatte (5) begrenzt ist, wobei
1.9 eine erste Gerade ausgehend von der Mittellinie (L) in einem ersten Winkel von 40 - 50 Grad, insbesondere 45 Grad, zu einer senkrecht zur Mittellinie angeordneten Hilfsgeraden verläuft; und
1.10 jede weitere Gerade auf der vorhergehenden Geraden in einem Punkt ansetzt, in dem die Projektion der vorhergehenden Geraden senkrecht zur Mittellinie 40 - 60 %, insbesondere 50 %, der verbleibenden Restbreite der Hälfte der Kontur erreicht, wobei
1.11 der Winkel zwischen der Geraden und der vorherigen Geraden 40 - 60 %, insbesondere 50 % des Winkels zwischen den vorhergegangenen (Hilfs-)Geraden beträgt.

2. Elastische Kupplung mit
2.1 einem Primärteil;
2.2 einem Sekundärteil;
2.3 mehreren über den Umfang verteilt zwischen Primärteil und Sekundärteil angeordneten Federelementen;
2.4 wenigstens einem elastischen Federkörper in jedem der Federelemente, welcher zwischen zwei Stützplatten angeordnet ist, wobei
2.5 der elastische Federkörper im Bereich seiner Stirnseiten eine umlaufende Nut aufweist,
**dadurch gekennzeichnet, dass**
2.6 der Verlauf einer Kontur der Nut (7) in einer Ebene, in welcher die Mittelachse (A) des elastischen Federkörpers (6) verläuft, im verspannten Zustand des elastischen Federkörpers (6) frei von einem Wendepunkt ist, wozu
2.7 die Kontur der Nut (7) im nicht verspannten Zustand spiegelsymmetrisch zu einer Mittellinie (L) in der Ebene, in welcher die Mittelachse (A) des elastischen Federkörpers (6) verläuft, ausgebildet ist, wobei jede der Hälften der Kontur so ausgebildet ist, dass
2.8 die Kontur der Nut (7) durch eine Kreisabschnitt (K) und den Teil einer Tangensfunktion (T) gebildet ist, wobei
2.9 der Teil des Kreisabschnitts (K) ausgehend von der Mittellinie (L) bis zu einem Punkt (P) läuft, in dem er stetig in die Tangensfunktion (T) übergeht.

3. Elastische Kupplung nach einem der Ansprüche 1 bis 2, **dadurch gekennzeichnet, dass** der Verlauf der Kontur der Nut (7) in jeder der Ebenen mit der Mittelachse (A) im Wesentlichen identisch ausgebildet ist.

4. Elastische Kupplung nach einem der Ansprüche 1 bis 3, **dadurch gekennzeichnet, dass** die Breite der Kontur 85 % - 95 %, bevorzugt 93,5 % der Dicke des elastischen Federkörpers (6) einnimmt, wobei auf beiden Seiten der Kontur Teile des elastischen Federkörpers (6) zwischen der Kontur und den Stützplatten (5) verbleibt, deren Außenkontur insbesondere im Wesentlichen senkrecht zur Mittellinie (L) verläuft.

5. Elastische Kupplung nach einem der Ansprüche 1 bis 4, **dadurch gekennzeichnet, dass** die einander zugewandten Oberflächen des elastischen Federkörpers (6) und der Stützplatten (5) im Wesentlichen senkrecht zur Mittelachse (A) des Federelementes (4) ausgebildet sind.

6. Elastische Kupplung nach einem der Ansprüche 1 bis 5, **dadurch gekennzeichnet, dass** die senkrecht zur Mittelachse (A) ausgebildeten Oberflächen der elastischen Federkörper (6) und der Stützplatten (5) in jeder der elastischen Federkörper (6) und der Stützplatten (5) im Wesentlichen parallel zueinander ausgebildet sind.

7. Elastische Kupplung nach einem der Ansprüche 1 bis 6, **dadurch gekennzeichnet, dass** jedes der Federelemente (4) mehrere abwechselnd aufeinander gestapelte elastische Federkörper (6) und Stützplatten (5) aufweist.

8. Elastische Kupplung nach einem der Ansprüche 1 bis 7, **dadurch gekennzeichnet, dass** die elastischen Federkörper (6) aus Gummi und die Stützplatten (5) aus Metall ausgebildet sind, wobei die elastischen Federkörper (6) und die Stützplatten (5) innerhalb eines Federelements (4) durch Vulkanisieren miteinander verbunden sind.

9. Elastische Kupplung nach einem der Ansprüche 1 bis 8, **dadurch gekennzeichnet, dass** jeder der elastischen Federkörper (6) einen rechteckigen Querschnitt in einer Ebene senkrecht zu seiner Mittelachse (A) aufweist.

10. Elastische Kupplung nach einem der Ansprüche 1 bis 9, **dadurch gekennzeichnet, dass** die Federelemente (4) im Wesentlichen quaderförmig ausgebildet sind.

## Claims

1. An elastic coupling having
1.1 a primary part;
1.2 a secondary part;
1.3 several spring elements distributed around the periphery between the primary part and the secondary part;
1.4 at least one elastic spring body in each of the spring elements,
which is arranged between two support plates, wherein
1.5 the elastic spring body includes a circumferential groove in the region of its front sides,
**characterised in that**
1.6 the curve of a contour of the groove (7) on a plane, in which the central axis (A) of the elastic spring body (6) extends, has no point of inflection when the elastic spring body (6) is stretched for which purpose
1.7 the contour of the groove (7), when the spring body not stretched, is formed mirror-symmetrically to a central line (L) on the plane, in which the central axis (A) of the elastic spring body (6) extends, whereas each of the halves of the contour is designed in such a way that
1.8 the contour of the groove (7) is delineated but a line composed of several straight lines (G1 ... Gn) in the direction of the central axis (A) and of the neighbouring support plate (5), wherein
1.9 a first straight line runs from the central line (L) in a first angle of 40 - 50 degrees, in particular 45 degrees, along an auxiliary straight line arranged vertically to the central line; and
1.10 each further straight line starts on the previous straight line at a point in which the projection of the previous straight line vertically to the central line reaches 40 - 60 %, in particular 50 % pf the residual width of the half of the contour, wherein
1.11 the angle between the straight line and the previous straight line is 40 - 60 %, in particular 50 % of the angle between the previous (auxiliary) straight lines.

2. An elastic coupling having
2.1 a primary part;
2.2 a secondary part;
2.3 several spring elements distributed around the periphery between the primary part and the secondary part;
2.4 at least one elastic spring body in each of the spring elements,
which is arranged between two support plates, wherein
2.5 the elastic spring body includes a circumferential groove in the region of its front sides,
**characterised in that**
2.6 the curve of a contour of the groove (7) on a plane, in which the central axis (A) of the elastic spring body (6) extends, has no point of inflection when the elastic spring body (6) is stretched for which purpose
2.7 the contour of the groove (7), when the spring body not stretched, is formed mirror-symmetrically to a central line (L) on the plane, in which the central axis (A) of the elastic spring body (6) extends, whereas each of the halves of the contour is designed in such a way that
2.8 the contour of the groove (7) is formed by a circular portion (K) and a portion of a tangent function (T), wherein
2.9 the part of the circular portion (K) runs from the central line (L) to a point, at which it steadily turns into the tangent function (T).

3. An elastic coupling according to one of claims 1 to 2, **characterised in that** the curve of the contour of the groove (7) in each of the planes is designed with the central axis (A) substantially identical.

4. An elastic coupling according to one of claims 1 to 3, **characterised in that** the width of the contour fills up 85 % - 95 %, preferably 93.5 % of the thickness of the elastic spring body (6), whereas parts of the elastic spring body (6) remain between the contour and the support plates (5) on both sides of the contour, parts whose external contour in particular runs substantially vertical to the central line (L).

5. An elastic coupling according to one of claims 1 to 4, **characterised in that** the surfaces, facing one another, of the elastic spring body (6) and the support plates (5) are designed substantially vertical to the central axis (A) of the elastic member (4).

6. An elastic coupling according to one of claims 1 to 5, **characterised in that** the surfaces, formed vertical to the central axis (A), of the elastic spring body (6) and of the support plates (5) are designed substantially parallel to one another in each of the elastic spring bodies (6) and of the support plates (5).

7. An elastic coupling according to one of claims 1 to 6, **characterised in that** each of the spring elements (4) has several elastic spring bodies (6) and support plates (5) stacked on one another alternately.

8. An elastic coupling according to one of claims 1 to 7, **characterised in that** the elastic spring bodies (6) are made of rubber and the support plates (5) are made of metal, whereas the elastic spring bodies (6) and the support plates (5) are connected to each other by vulcanisation inside a spring element (4).

9. An elastic coupling according to one of claims 1 to 8, **characterised in that** each of the elastic spring bodies (6) has a rectangular cross-section a plane perpendicular to its central axis (A).

10. An elastic coupling according to one of claims 1 to 9, **characterised in that** the spring elements (4) are designed substantially cube-shaped.

## Revendications

1. Accouplement élastique présentant
1.1 une partie primaire;
1.2 une partie secondaire;
1.3 plusieurs éléments élastiques répartis sur la circonférence entre la partie primaire et la partie secondaire;
1.4 au moins un corps ressort élastique dans chacun des éléments élastiques,
qui est disposé entre deux plaques supports, où
1.5 le corps ressort élastique présente une gorge circonférentielle dans la zone de ses faces frontales.
**caractérisé en ce que**
1.6 le tracé d'un contour de la gorge (7) sur un plan, dans lequel s'étend l'axe médian (A) du corps ressort élastique (6), ne contient pas de point d'inflexion lorsque le corps ressort élastique (6) est tendu, où
1.7 le contour de la gorge (7), lorsque le corps ressort n'est pas tendu, est homothétique par rapport à une ligne médiane (L) dans le plan, dans lequel s'étend l'axe médian (A) du corps ressort élastique (6), où chacune des moitiés du contour est conçue de telle sorte que
1.8 le contour de la gorge (7) est délimité par une ligne composée de plusieurs droites (G1 ... Gn) en direction de l'axe médian (A) et de la plaque support voisine (5), où
1.9 une première droite s'étend de la ligne médiane (L) dans un premier angle de 40 - 50 degrés, en particulier 45 degrés, à une ligne droite auxiliaire disposée perpendiculaire à la ligne médiane; et
1.10 chaque droite supplémentaire sur la droite précédente part en un point auquel la projection de la droite précédente atteind 40 - 60%, en particulier 50% de la largeur résiduelle de la moitié du contour perpendiculairement à la ligne médiane, où
1.11 l'angle entre la droite et la droite précédente est de 40 - 60 %, en particulier 50 % de l'angle entre les droites (auxiliaires) précédentes.

2. Accouplement élastique présentant
2.1 une partie primaire;
2.2 une partie secondaire;
2.3 plusieurs éléments élastiques répartis sur la circonférence entre la partie primaire et la partie secondaire;
2.4 au moins un corps ressort élastique dans chacun des éléments élastiques,
qui est disposé entre deux plaques supports, où
2.5 le corps ressort élastique présente une gorge circonférentielle dans la zone de ses faces frontales.
**caractérisé en ce que**
2.6 le tracé d'un contour de la gorge (7) sur un plan, dans lequel s'étend l'axe médian (A) du corps ressort élastique (6), ne contient pas de point d'inflexion lorsque le corps ressort élastique (6) est tendu, où
2.7 le contour de la gorge (7), lorsque le corps ressort n'est pas tendu, est homothétique par rapport à une ligne médiane (L) dans le plan, dans lequel s'étend l'axe médian (A) du corps ressort élastique (6), où chacune des moitiés du contour est conçue de telle sorte que
2.8 le contour de la gorge (7) est constitué d'une section circulaire (K) et d'une partie de fonction tangentielle (T), où
2.9 la partie de la section circulaire (K) part de la ligne médiane (L) pour atteindre un point (P) auquel il passe en fonction tangentielle (T).

3. Accouplement élastique selon l'une des revendications 1 à 2, **caractérisé en ce que** le tracé du contour de la gorge (7) est conçu de manière substantiellement identique dans chacun des plans avec l'axe médian (A).

4. Accouplement élastique selon l'une des revendications 1 à 3, **caractérisé en ce que** la largeur du contour est de 85 % - 95 %, de préférence 93,5 % de l'épaisseur du corps ressort élastique (6), où des parties du corps ressort élastique (6) restent entre le contour et les plaques supports (5), des deux côtés du contour, parties dont le contour externe s'étend notamment plus ou moins à la verticale de la ligne médiane.

5. Accouplement élastique selon l'une des revendications 1 à 4, **caractérisé en ce que** les surfaces, tournées l'une vers l'autre, du corps ressort élastique (6) et des plaques supports (5) sont conçues plus ou moins perpendiculaires à l'axe médian (A) de l'élément élastique (4).

6. Accouplement élastique selon l'une des revendications 1 à 5, **caractérisé en ce que** les surfaces conçues comme perpendiculaires à l'axe médian (A), des corps ressort élastiques (6) et des plaques supports (5) sont constituées dans chacun des corps ressort élastiques (6) et des plaques supports (5).

7. Accouplement élastique selon l'une des revendications 1 à 6, **caractérisé en ce que** chacun des éléments élastiques (4) présente plusieurs corps ressort élastiques (6) et plaques supports (5) empilés les uns sur les autres de manière alternée.

8. Accouplement élastique selon l'une des revendications 1 à 7, **caractérisé en ce que** les corps ressort élastiques (6) sont en caoutchouc et les plaques supports (5) sont en métal, où les corps ressort élastiques (6) et les plaques supports (5) sont reliés entre eux par vulcanisation à l'intérieur d'un élément ressort (4).

9. Accouplement élastique selon l'une des revendications 1 à 8, **caractérisé en ce que** chacun des corps ressort élastiques (6) présente une section rectangulaire dans un plan perpendicuairement à son axe médian (A).

10. Accouplement élastique selon l'une des revendications 1 à 9, **caractérisé en ce que** les éléments élastiques (4) sont conçus plus ou moins de forme parallélépipédique.
